# EUROPEAN PATENT SPECIFICATION

(11) **EP 4 197 811 B1**
(45) Date of publication and mention of the grant of the patent: **13.11.2024**
(21) Application number: 22213112.0
(22) Date of filing: 13.12.2022
(51) Int. Cl.: B60C 7/14, B32B 3/12, D03D 11/02

(54) **NON-PNEUMATIC TIRE WITH IMPROVED SHEAR BAND**
LUFTLOSER REIFEN MIT VERBESSERTEM SCHERBAND
PNEU NON PNEUMATIQUE AVEC BANDE DE CISAILLEMENT AMÉLIORÉE

(30) Priority: 17.12.2021 US 202163265619 P; 10.10.2022 US 202218045235
(43) Date of publication of application: 21.06.2023
(73) Proprietor: The Goodyear Tire & Rubber Company, Akron, OH 44316 (US)
(72) Inventor: SPORTELLI, Francesco, 3249 Bettembourg (LU); BOES, Claude Ernest Felix, L-9147 Erpeldange (LU); WILMS, Stefan, L-7373 Helmdange (LU); MERSCH, Romain Jack Rodolphe, L-7519 Mersch (LU)
(74) Representative: Kutsch, Bernd

(56) References cited:
- EP-A1- 3 231 635
- EP-A1- 3 231 637
- EP-A1- 3 238 957
- EP-A1- 3 888 942

## Description

### Field of the Invention

The present invention relates generally to vehicle tires and non-pneumatic tires, and more particularly, to an improved shear band for a non-pneumatic tire.

### Background of the Invention

The pneumatic tire has been the solution of choice for vehicular mobility for over a century. The pneumatic tire is a tensile structure. The pneumatic tire has at least four characteristics that make the pneumatic tire so dominant today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed gasses. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

The purpose of the shear band is to transfer the load from contact with the ground through tension in the spokes or connecting web to the hub, creating a top loading structure. When the shear band deforms, its preferred form of deformation is shear over bending. The shear mode of deformation occurs because of the inextensible membranes located on the outer portions of the shear band. Prior art non-pneumatic tire typically has a shear band made from rubber materials sandwiched between at least two layers of inextensible belts or membranes. The disadvantage to this type of construction is that the use of rubber significantly increases the cost and weight of the non-pneumatic tire. Another disadvantage to the use of rubber is that is generates heat, particularly in the shear band. Furthermore, the rubber in the shear band needs to be soft in shear, which makes it difficult to find the desired compound.

Thus, an improved non-pneumatic tire is desired that has all the features of the pneumatic tires without the drawback of the need for air inflation is desired.

EP 3 231 637 A1 and EP 3 231 635 A1 describe a non-pneumatic tire in accordance with the preamble of claim 1.

EP 3 888 942 A1 describes a shear band with two rubber layers. EP 3 238 957 A1 shows a shear band with only a first and second layer of fabric.

### Summary of the Invention

The invention relates to a tire in accordance with claim 1.

Dependent claims refer to preferred embodiment of the invention.

### Brief Description of the Drawings

The present invention will be better understood through reference to the following description and the appended drawings, in which:
FIG. 1 is a perspective view of a first embodiment of a non-pneumatic tire of the present invention;
FIG. 2 is a cross-sectional view of a first embodiment of a shear band and outer tread ring;
FIG. 3A is a perspective view of a three-dimensional fabric structure;
FIG. 3B is a cross-sectional view of example pile reinforcement member configurations of the three-dimensional fabric structure of FIG. 3A;
FIG. 3C illustrate an exemplary three-dimensional fabric structure with a closely knit upper and lower fabric with FIG. 8 shaped pile reinforcement members that are in a closely spaced configuration;
FIG. 3D illustrates an exemplary three-dimensional fabric structure with an upper and lower fabric layer with straight pile reinforcement members;
FIG. 4A illustrates the formation of a non-crimped fabric formed of two fiber layers oriented at +45 deg and -45 deg;
FIGS. 4B-4C illustrate the attachment of the non-crimped fabric layers of FIG. 4A to a three-dimensional spacer fabric structure by warp knitting;
FIG. 4D illustrates a woven fabric, while FIG. 4E illustrates a non-crimped fabric;
FIG. 4F illustrates the formation of non-crimped fabric with multi-axial fiber layers at different orientations;
FIG. 5A illustrates a three- dimensional spacer fabric with its upper and lower fabric layers being reinforced with a non-crimped fabric having a biaxial reinforcement structure and a rubber or thermoplastic layer; and
FIG. 5B is an exploded view of the three-dimensional spacer fabric structure of Fig. 5A.

### Definitions

The following terms are defined as follows for this description.

"Auxetic material" means a material that has a negative Poisson's ratio.

"Cord" means the twisted fiber or filament of, for instance, polyester, rayon, nylon or steel, which form a reinforcement cord.

"Equatorial Plane" means a plane perpendicular to the axis of rotation of the tire passing through the centerline of the tire.

"Fabric" means a network of cords which extend in in multiple directions.

"Free area" is a measure of the openness of the fabric per DIN EN 14971 and is the amount of area in the fabric plane that is not covered by yarn. It is a visual measurement of the tightness of the fabric and is determined by taking an electronic image of the light from a light table passing through a 15.24 cm by 15.24 cm square sample of the fabric and comparing the intensity of the measured light to the intensity of the white pixels.

"Inextensible" means that a given layer has an extensional stiffness greater than 172.4 MPa (25 Ksi).

"Knitted" is meant to include a structure producible by interlocking a series of loops of one or more yarns by means of needles or wires, such as warp knits and weft knits.

"Three-dimensional spacer structure" may mean a three-dimensional structure composed from two outer layers of fabric, each outer layer of fabric having reinforcement members (such as yarns, filaments or fibers) which extend in a first and second direction, wherein the two outer layers are connected together by reinforcement members (yarns, filaments or fibers) or other knitted layers that extend in a defined third direction. An "open" three-dimensional spacer structure comprises individual pile fibers or reinforcements that connect the first and second layer of fabric. A "closed" three-dimensional structure utilizes fabric piles that connect the first and second layers.

"Yarn" means a continuous strand of textile fibers or filaments. A monofilament yarn has only a single filament with or without twist.

"Woven" is meant to include a structure produced by multiple yarns crossing each other at right angles to form the grain, like a basket.

### Detailed Description of Preferred Embodiments of the Invention

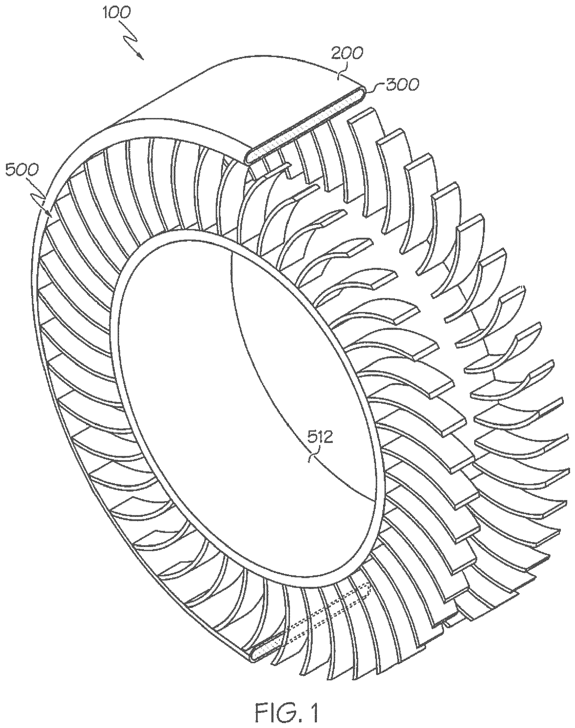

A first embodiment of a non-pneumatic tire 100 of the present invention is shown in FIG. 1. The tire of the present invention includes a radially outer ground engaging tread 200, a shear band 300, and a connecting web 500. The tire tread 200 may include elements such as ribs, blocks, lugs, grooves, and sipes as desired to improve the performance of the tire in various conditions. The connecting web 500 is mounted on a hub 512 and may have different designs, such as spokes or an elastomeric web. The non-pneumatic tire of the present invention is designed to be a top loading structure, so that the shear band 300 and the connecting web 500 efficiently carry the load. The shear band 300 and the connecting web are designed so that the stiffness of the shear band is directly related to the spring rate of the tire. The connecting web is designed to be a stiff structure when in tension that buckles or deforms in the tire footprint and does not compress or carry a compressive load. This allows the rest of the connecting web not in the footprint area the ability to carry the load, resulting in a very load efficient structure. It is desired to allow the shearband to bend to overcome road obstacles. The approximate load distribution is preferably such that approximately 90-100% of the load is carried by the shear band and the upper portion of the connecting web, so that the lower portion of the connecting web carry virtually zero of the load, and preferably less than 10%.

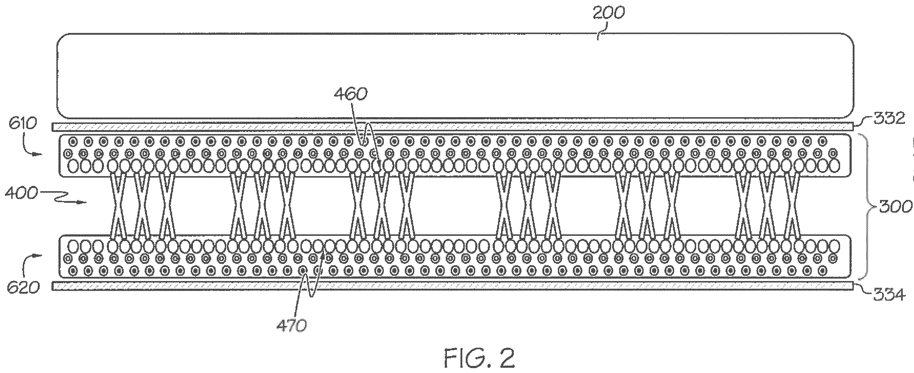

The shear band 300 is preferably an annular structure that is located radially inward of the tire tread 200. The shear band includes a three-dimensional spacer structure 400, shown in FIG. 2. The three-dimensional spacer structure 400 may be positioned between a first and second layer of gum rubber 332, 334 (not shown to scale). The gum rubber 332, 334 may be as thick as desired.

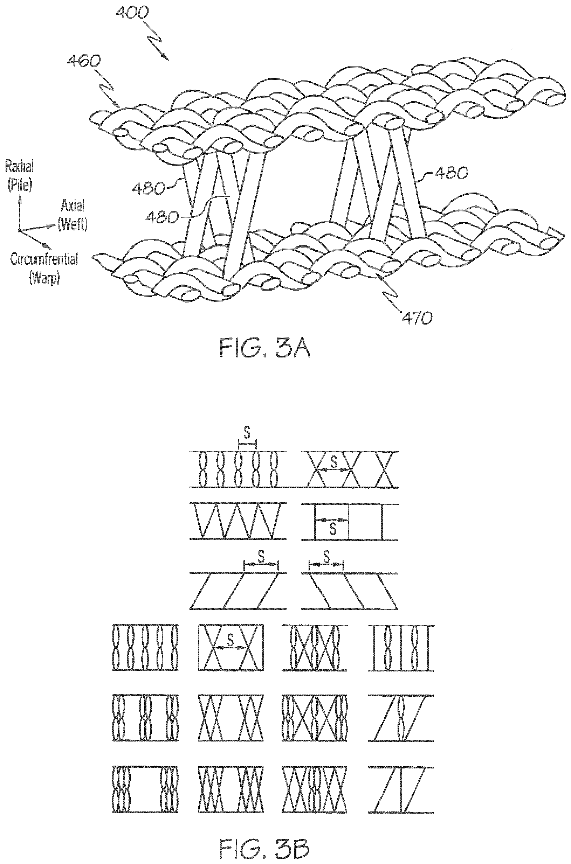

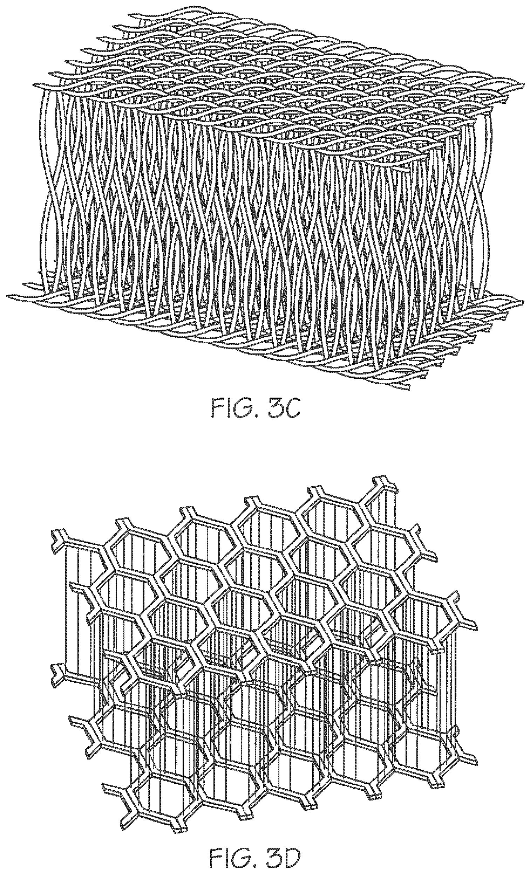

As shown in FIG. 2 and in FIG. 3A, the three-dimensional spacer structure 400 is a type of structure that is formed of a first and second layer of fabric 460, 470, wherein each layer of fabric is formed from reinforcement members that may be knitted, woven, nonwoven, interlaced or non-interlaced. The reinforcement members are preferably multifilament and formed of polyester or nylon material. The first and second layers 460, 470 of fabric are preferably oriented parallel with respect to each other and are interconnected with each other by a plurality of pile connecting members 480 that extend in a third or pile dimension. As shown in FIG. 3B, the pile connecting members 480 may form a straight connection of the first and second layers 460, 470 that may extend in the radial direction or be angled with the radial direction. The pile connecting members 480 may form an X shape, or letter 8 shape or combinations thereof. The pile connecting members 480 are preferably monofilaments made of polyester material. FIG. 3C illustrates an exemplary three-dimensional spacer structure with a closely knit upper and lower fabric with pile reinforcement members in a closely spaced configuration. FIG. 3D illustrates an exemplary three-dimensional spacer structure with upper and lower fabric layers having a pattern of hexagonal shaped recesses formed with straight pile reinforcement members.

The perpendicular distance between the connecting layers 460, 470 or Z direction dimension of the three-dimensional structure is preferably in the range of 2 millimeters to 25 millimeters, more preferably 3-10 millimeters, and even more preferably in the range of 5-10 mm.

The three-dimensional spacer structure 400 is preferably oriented in the shear band so that the first and second layers 460, 470 are aligned in parallel relation and extend across the axial direction of the non-pneumatic tire, as well as extending in the circumferential direction. The pile reinforcement members 480 of three-dimensional fabric structure 400 are preferably aligned with the radial direction of the non-pneumatic tire.

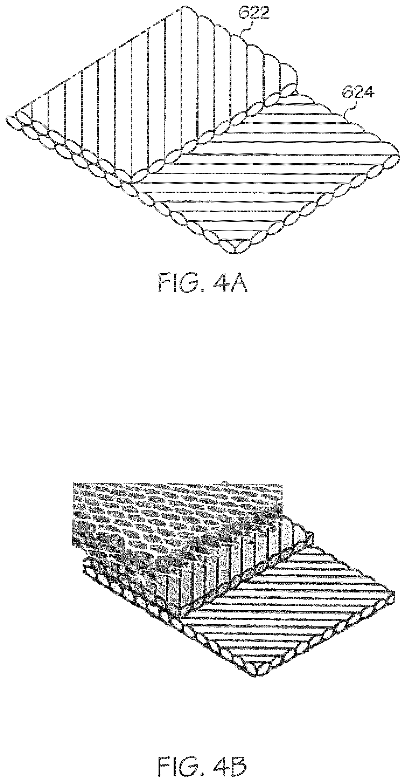

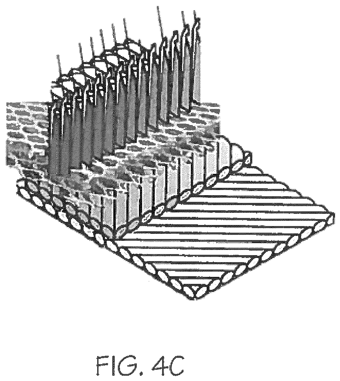

As shown in FIG. 2, the three-dimensional spacer structure has upper and lower fabric layers 460, 470 that are each knitted or otherwise joined to a non-crimped fabric layer (NCF) 610, 620 respectively. As shown in FIGS. 4A-4C, the NCF layer 610, 620 is formed from two fiber layers 622, 624 wherein the orientation of the fiber layers are selected for optimum performance. In this example, the fiber orientation of layers 622, 624 are +45 degrees and - 45 degrees. The invention is not limited to this fiber orientation, as other orientations may be utilized such as zero degree, 90 degree and in the range of 0 to 180 degrees. The NCF layers 610, 620 are joined together with the lower layer of the three-dimensional spacer structure 400 by warp knitting as shown in FIG. 4C. The process is preferably repeated for the upper layer of the three-dimensional spacer structure 400, so that the top and bottom layers 460, 470 are each reinforced with a NCF layer 610, 620.

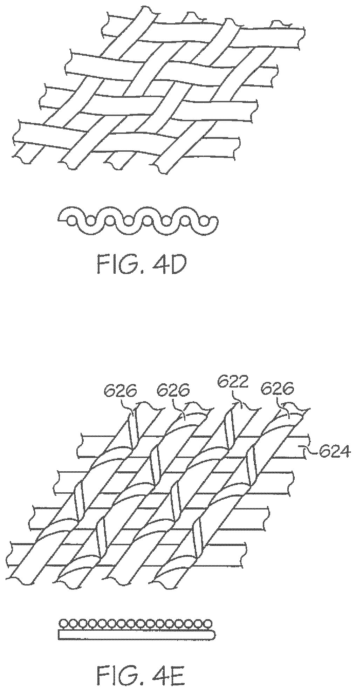

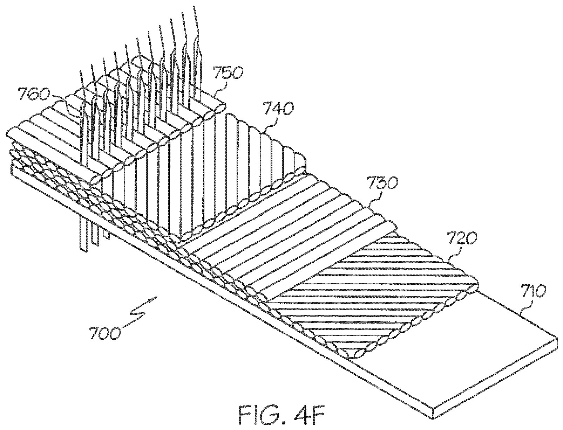

FIG. 4E illustrates a NCF layer having a bi-axial reinforcement structure with fiber layers 622, 624 oriented perpendicular to each other and secured together with warp knitting yarn 626. As compared to a woven fabric as shown in FIG. 4D, the NCF layer has highly aligned fibers without the undulations of the woven fabric. FIG. 4F illustrates that the NCF reinforcement layer 700 may comprise multiple layers, and as shown, includes an optional nonwoven layer 710, a fiber layer 720 of 45 degrees, a fiber layer 730 of 90 degrees, a fiber layer 740 of -45 degrees, and a fiber layer 750 of zero degrees that are all knitted together with a warp knitting yarn 760. The angular orientations refer to the angle the fibers make with the tire circumferential plane. For example, a fiber orientation of zero degrees, means that the fibers are oriented in the circumferential direction, and 90 degrees are oriented perpendicular to the zero degree fibers and are aligned with the axial direction of the tire.

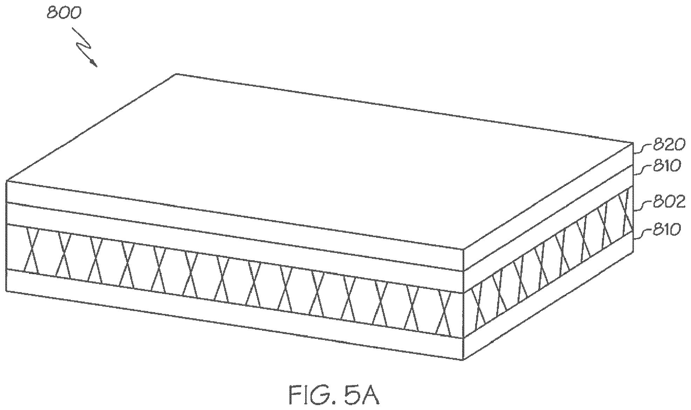

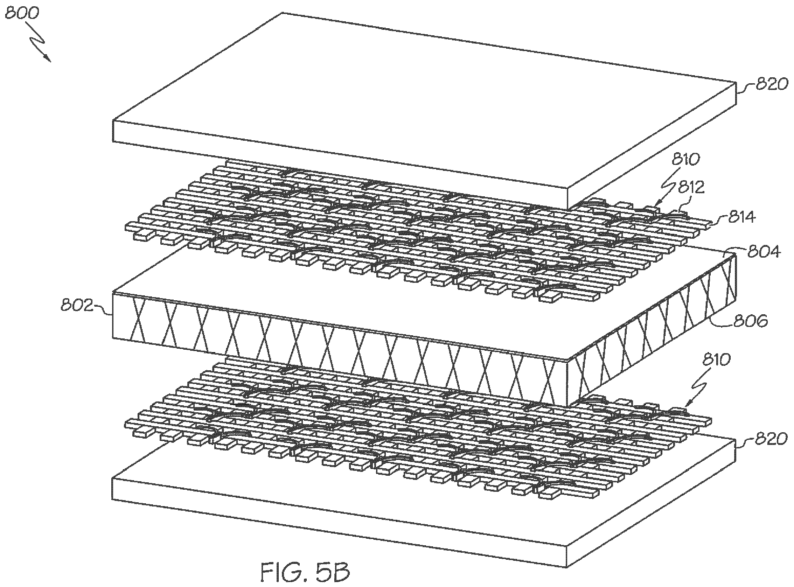

FIGS. 5A and 5B illustrate a second embodiment of the shear band 800 of the present invention. The shear band 800 includes a three-dimensional spacer structure 802 that has an upper and lower fabric surface 804, 806 that is knitted to a NCF fabric with a biaxial reinforcement structure 810, wherein the fibers 812, 814 are perpendicular to each other and oriented at zero degrees and 90 degrees with respect to the tire mid-circumferential plane.

Both the three-dimensional spacer fabric and the integrated NCF layer are coated with a skin layer 820 formed of rubber, urethane, polyurethane, or thermoplastic materials such as polypropylene, polyester terephthalates, polyamides, polyethylene, thermoplastic copolymers, and thermoplastic co-polyesters. The skin layer may be applied by spraying, brushing, stamping, 3D printing, liquid bath or other methods known to those skilled in the art.

The NCF layers as described above may be formed of glass fibers, carbon fibers or hybrid fibers combining glass and carbon fibers. The three-dimensional spacer structure may be additionally reinforced with cords or wires or combinations thereof. The resulting shear band composite structure is strong and ultralight and dispenses with the need for additional belt reinforcing layers or rubber shear layers.

Preferably, the three-dimensional fabric structure 400 is treated with an RFL adhesive prior to application of the skin layer, which is a well-known resorcinol-formaldehyde resin/butadiene-styrene-vinyl pyridine terpolymer latex, or a blend thereof with a butadiene/styrene rubber latex, that is used in the tire industry for application to fabrics, fibers and textile cords for aiding in their adherence to rubber components (for example, see U.S. Patent No. 4,356,219.) The reinforcement members may be single end dipped members (i.e., a single reinforcement member is dipped in RFL adhesive or adhesion promoter.)

The three-dimensional fabric structure 400 preferably has a density in the range of from 700 to 1000 gram/m² as measured by DIN 12127. The compression stiffness of the three-dimensional fabric structure 400 preferably ranges of from 50 to 600 kPa as measured by DIN/ISO 33861, and more preferably from 100 to 250 kPa.

## Claims

1. A non-pneumatic tire having an outer tread ring (200) and a shear band (300, 800), wherein the shear band (300, 800) includes a three-dimensional spacer structure (400, 802) comprising a first and second layer of fabric (460, 470), **characterized in that** the first and second layer of fabric (460, 470) are connected to a respective first and second layer (610, 620) of non-crimped fabric (700, 810).

2. The non-pneumatic tire of claim 1 wherein the non-crimped layer of fabric (700, 810) is formed from a first and second layer of fiber (720, 730, 740, 750).

3. The non-pneumatic tire of claim 1 or 2 wherein the first and second layer of fabric (460, 470) of the three-dimensional spacer structure (400, 802) are each knitted to the respective non-crimped layer of fabric.

4. The nonpneumatic tire of claim 2 or 3 wherein the fibers in the first layer (720) are parallel with respect to each other and angled at a first angle, and the fibers in the second layer (740) are parallel with respect to each other and angled at a second angle, wherein the first angle is different from the second angle.

5. The non-pneumatic tire of claim 4 wherein the fibers in the first layer (720) are angled at 45 degrees, and the fibers in the second layer (730) are angled at 90 degrees; or wherein the fibers in the first layer (720) are angled at +45 degrees, and the fibers in the second layer (740) are angled at -45 degrees; or wherein the fibers in the first layer (750) are angled at 0 degrees, and the fibers in the second layer (730) are angled at 90 degrees.

6. The non-pneumatic tire of at least one of the previous claims wherein the first and second layer of fiber (720, 730, 740, 750) is formed of or comprises glass fibers, carbon fibers or mixtures thereof.

7. The non-pneumatic tire of at least one of the previous claims wherein the first and second layers of fabric (460, 470) of the three-dimensional spacer structure (400, 802) are separated by a radial distance in the range of from 2 to 15 millimeters or in the range of from 3 to 8 mm millimeters.

8. The non-pneumatic tire of at least one of the previous claims wherein the first and second layers of fabric (460, 470) of the three-dimensional spacer structure (400, 802) are separated by a radial distance in the range of from 5 to 10 millimeters.

9. The non-pneumatic tire of at least one of the previous claims wherein the cross section of the three-dimensional spacer structure (400, 802) is nonuniform.

10. The non-pneumatic tire of at least one of the previous claims wherein the three-dimensional spacer structure (400, 802) comprises pile connecting members (480) extending in the radial direction and perpendicular or at least substantially perpendicular to the first and second layer of fabric (460, 470).

11. The non-pneumatic tire of at least one of the previous claims wherein the tread (200) and the shear band (300) do not have a shear layer of rubber or elastomer and/or do not have a layer of reinforcements.

12. The non-pneumatic tire of at least one of the previous claims wherein the first and second layer of fabric (460, 470) of the three-dimensional spacer structure (400, 802) and the respective non-crimped layer of fabric (610, 620) are coated with a skin layer (820) formed of or comprising rubber, urethane, polyurethane, or thermoplastic materials such as polypropylene, polyester terephthalates, polyamides, polyethylene, thermoplastic copolymers, and thermoplastic co-polyesters.

13. The non-pneumatic tire of claim 12 wherein the skin layer (820) is a layer applied by spraying, brushing, stamping, 3D printing, or liquid bath.

14. The non-pneumatic tire of at least one of the previous claims wherein the non-crimped layer of fabric (610, 620) includes a non-woven layer or film.

15. The non-pneumatic tire of at least one of the previous claims wherein the non-crimped layer of fabric (610, 620) is reinforced with organic or metal reinforcement cords.

## Patentansprüche

1. Nicht-pneumatischer Reifen, der einen äußeren Laufflächenring (200) und ein Scherband (300, 800) aufweist, wobei das Scherband (300, 800) eine dreidimensionale Zwischenringstruktur (400, 802) enthält, die eine erste und eine zweite Gewebelage (460, 470) umfasst, **dadurch gekennzeichnet, dass** die erste und die zweite Gewebelage (460, 470) mit einer jeweiligen ersten und zweiten Lage (610, 620) eines nicht gekräuselten Gewebes (700, 810) verbunden sind.

2. Nicht-pneumatischer Reifen nach Anspruch 1, wobei die nicht gekräuselte Gewebelage (700, 810) aus einer ersten und einer zweiten Faserlage (720, 730, 740, 750) gebildet ist.

3. Nicht-pneumatischer Reifen nach Anspruch 1 oder 2, wobei die erste und die zweite Gewebelage (460, 470) der dreidimensionalen Zwischenringstruktur (400, 802) jeweils mit der entsprechenden nicht gekräuselten Gewebelage verstrickt sind.

4. Nicht-pneumatischer Reifen nach Anspruch 2 oder 3, wobei die Fasern in der ersten Schicht (720) parallel zueinander und unter einem ersten Winkel abgewinkelt sind und die Fasern in der zweiten Schicht (740) parallel zueinander und unter einem zweiten Winkel abgewinkelt sind, wobei sich der erste Winkel von dem zweiten Winkel unterscheidet.

5. Nicht-pneumatischer Reifen nach Anspruch 4, wobei die Fasern in der ersten Schicht (720) um 45 Grad und die Fasern in der zweiten Schicht (730) um 90 Grad abgewinkelt sind; oder wobei die Fasern in der ersten Schicht (720) um +45 Grad und die Fasern in der zweiten Schicht (740) um -45 Grad abgewinkelt sind; oder wobei die Fasern in der ersten Schicht (750) um 0 Grad und die Fasern in der zweiten Schicht (730) um 90 Grad abgewinkelt sind.

6. Nicht-pneumatischer Reifen nach mindestens einem der vorhergehenden Ansprüche, wobei die erste und zweite Faserschicht (720, 730, 740, 750) aus Glasfasern, Kohlenstofffasern oder Mischungen davon gebildet ist oder diese umfasst.

7. Nichtpneumatischer Reifen nach mindestens einem der vorhergehenden Ansprüche, wobei die erste und die zweite Gewebelage (460, 470) der dreidimensionalen Zwischenringstruktur (400, 802) durch einen radialen Abstand in dem Bereich von 2 bis 15 Millimetern oder im Bereich von 3 bis 8 mm Millimetern getrennt sind.

8. Nichtpneumatischer Reifen nach mindestens einem der vorhergehenden Ansprüche, wobei die erste und die zweite Gewebelage (460, 470) der dreidimensionalen Zwischenringstruktur (400, 802) durch einen radialen Abstand in dem Bereich von 5 bis 10 Millimetern getrennt sind.

9. Nicht-pneumatischer Reifen nach mindestens einem der vorhergehenden Ansprüche, wobei der Querschnitt der dreidimensionalen Zwischenringstruktur (400, 802) ungleichmäßig ist.

10. Nicht-pneumatischer Reifen nach mindestens einem der vorhergehenden Ansprüche, wobei die dreidimensionale Zwischenringstruktur (400, 802) Florverbindungselemente (480) umfasst, die sich in radialer Richtung und senkrecht oder zumindest im Wesentlichen senkrecht zu der ersten und zweiten Gewebelage (460, 470) erstrecken.

11. Nicht-pneumatischer Reifen nach mindestens einem der vorhergehenden Ansprüche, wobei die Lauffläche (200) und das Scherband (300) keine Scherschicht aus Gummi oder Elastomer und/oder keine Verstärkungsschicht aufweisen.

12. Nicht-pneumatischer Reifen nach mindestens einem der vorhergehenden Ansprüche, wobei die erste und zweite Gewebelage (460, 470) der dreidimensionalen Zwischenringstruktur (400, 802) und die jeweilige nicht gekräuselte Gewebelage (610, 620) mit einer Außenschicht (820) beschichtet sind, die aus Gummi, Urethan, Polyurethan oder thermoplastischen Materialien wie Polypropylen, Polyesterterephthalaten, Polyamiden, Polyethylen, thermoplastischen Copolymeren und thermoplastischen Copolyestern gebildet ist oder diese umfasst.

13. Nichtpneumatischer Reifen nach Anspruch 12, wobei die Außenschicht (820) eine Schicht ist, die durch Sprühen, Pinseln, Stempeln, 3D-Druck oder ein Flüssigkeitsbad aufgebracht wird.

14. Nicht-pneumatischer Reifen nach mindestens einem der vorhergehenden Ansprüche, wobei die nicht gekräuselte Gewebelage (610, 620) eine Vliesstofflage oder Folie enthält.

15. Nichtpneumatischer Reifen nach mindestens einem der vorhergehenden Ansprüche, wobei die nicht gekräuselte Gewebelage (610, 620) mit organischen oder metallischen Verstärkungskorden verstärkt ist.

## Revendications

1. Bandage non pneumatique qui possède un anneau faisant office de bande de roulement (200) et une bande de cisaillement (300, 800) ; dans lequel la bande de cisaillement (300, 800) englobe une structure en trois dimensions faisant office d'entretoise (400, 802) qui comprend une première et une seconde couche de tissu (460, 470), **caractérisé en ce que** la première et la seconde couche de tissu (460, 470) sont reliées à une première et à une seconde couche respectives (610, 620) de tissu non frisé (700, 810).

2. Bandage non pneumatique selon la revendication 1, dans lequel la couche de tissu non frisé (700, 810) est réalisée à partir d'une première et d'une seconde couche de fibres (720, 730, 740, 750).

3. Bandage non pneumatique selon la revendication 1 ou 2, dans lequel la première et la seconde couche de tissu (460, 470) de la structure en trois dimensions faisant office d'entretoise (400, 802) sont chacune reliée par tricotage à la couche respective de tissu non frisé.

4. Bandage non pneumatique selon la revendication 2 ou 3, dans lequel les fibres dans la première couche (720) sont parallèles les unes aux autres et forment un premier angle, et les fibres dans la seconde couche (740) sont parallèles les unes aux autres et forment un second angle, dans lequel le premier angle est différent du second angle.

5. Bandage non pneumatique selon la revendication 4, dans lequel les fibres dans la première couche (720) forment un angle de 45 degrés et les fibres dans la seconde couche (730) forment un angle de 90 degrés ; ou dans lequel les fibres dans la première couche (720) forment un angle de +45 degrés et les fibres dans la seconde couche (730) forment un angle de -45 degrés ; ou dans lequel les fibres dans la première couche (720) forment un angle de 0 degré et les fibres dans la seconde couche (730) forment un angle de 90 degrés.

6. Bandage non pneumatique selon l'une quelconque des revendications précédentes, dans lequel la première et la seconde couche de fibres (720, 730, 740, 750) sont réalisées à partir de fibres de verre, de fibres de carbone ou de leurs mélanges ou comprennent les fibres en question.

7. Bandage non pneumatique selon l'une quelconque des revendications précédentes, dans lequel la première et la seconde couche de tissu (460, 470) de la structure en trois dimensions faisant office d'entretoise (400, 802) sont séparées sur une distance radiale dans la plage de 2 à 15 mm ou dans la plage de 3 à 8 mm.

8. Bandage non pneumatique selon l'une quelconque des revendications précédentes, dans lequel la première et la seconde couche de tissu (460, 470) de la structure en trois dimensions faisant office d'entretoise (400, 802) sont séparées sur une distance radiale dans la plage de 5 à 10 mm.

9. Bandage non pneumatique selon l'une quelconque des revendications précédentes, dans lequel la section transversale de la structure en trois dimensions faisant office d'entretoise (400, 802) est non uniforme.

10. Bandage non pneumatique selon l'une quelconque des revendications précédentes, dans lequel la structure en trois dimensions faisant office d'entretoise (400, 802) comprend des éléments de liaison en forme de poils (480) qui s'étendent dans la direction radiale et perpendiculairement ou, de manière au moins essentielle, perpendiculairement à la première et à la seconde couche de tissu (460, 470).

11. Bandage non pneumatique selon l'une quelconque des revendications précédentes, dans lequel la bande de roulement (200) et la bande de cisaillement (300) ne possèdent pas une couche de cisaillement à base de caoutchouc ou à base d'un élastomère et/ou ne possèdent pas une couche de renforcements.

12. Bandage non pneumatique selon l'une quelconque des revendications précédentes, dans lequel la première et la seconde couche de tissu (460, 470) de la structure en trois dimensions faisant office d'entretoise (400, 802) et la couche non frisée respective de tissu (610, 620) sont recouvertes d'une couche faisant office de peau (820) que l'on obtient à partir de caoutchouc, d'uréthane, de polyuréthane ou de matières thermoplastiques telles que du polypropylène, des polyester téréphtalates, des polyamides, du polyéthylène, des copolymères thermoplastiques et des copolyesters thermoplastiques, ou qui comprend les éléments qui ont été mentionnés ci-dessus.

13. Bandage non pneumatique selon la revendication 12, dans lequel la couche faisant office de peau (820) est une couche que l'on applique par pulvérisation, par brossage, par estampage, par impression en 3D ou à l'aide d'un bain liquide.

14. Bandage non pneumatique selon l'une quelconque des revendications précédentes, dans lequel la couche de tissu non frisé (610, 620) englobe une couche ou un film sous la forme d'un non-tissé.

15. Bandage non pneumatique selon l'une quelconque des revendications précédentes, dans lequel la couche de tissu non frisé (610, 620) est renforcée avec des câblés de renforcement organiques ou métalliques.
